(19) Europäisches Patentamt
European Patent Office
Office européen des brevets

(11) Veröffentlichungsnummer: **0 024 565**
**B1**

(12) # EUROPÄISCHE PATENTSCHRIFT

(45) Veröffentlichungstag der Patentschrift: **18.07.84**

(51) Int. Cl.³: **C 08 F 238/02** // (C08F238/02, 238/00)

(21) Anmeldenummer: **80104500.6**

(22) Anmeldetag: **30.07.80**

(54) **Verfahren zur Herstellung von Copolymerisaten des Acetylens.**

(30) Priorität: **18.08.79 DE 2933523**

(43) Veröffentlichungstag der Anmeldung: **11.03.81 Patentblatt 81/10**

(45) Bekanntmachung des Hinweises auf die Patenterteilung: **18.07.84 Patentblatt 84/29**

(84) Benannte Vertragsstaaten: **DE FR GB**

(56) Entgegenhaltungen:
**EP - A - 0 016 448**
**US - A - 4 020 265**
**US - A - 4 108 942**

(73) Patentinhaber: **BASF Aktiengesellschaft, Carl-Bosch-Strasse 38, D-6700 Ludwigshafen (DE)**

(72) Erfinder: **Naarmann, Herbert, Dr., Haardtblick 15, D-6719 Wattenheim (DE)**
Erfinder: **Penzien, Klaus, Dr., Bensheimer Ring 18, D-6710 Frankenthal (DE)**
Erfinder: **Viehe, Heinz Guenter, Dr., Place L. Pasteur 1, B-1348 Louvain-La Neuve (BE)**

**EP 0 024 565 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Herstellung von Copolymerisaten des Acetylens, wobei man Gemische aus Acetylen und Hetero-Alkinen mit metallorganischen Katalysatoren polymerisiert.

Die Herstellung von Polyacetylenen durch Polymerisation von Acetylen ist bekannt. Sie ist z. B. in den Arbeiten von D. J. Berets et al. (Trans. Farad. Soc. 64, (1968) Seite 823 folgende bekannt. Auch in neueren Publikationen von H. Shirakawa et wal J. Chem. Soc. Comm. 578 (1977) ist die Polymerisation von Acetylen zu Polyacetylenen mit Hilfe von Ziegler-Katalysatoren beschrieben. Nach den genannten Methoden werden Produkte erhalten, die in den üblichen Lösungsmitteln vollkommen unlöslich sind und als schwarze amorphe bis teilkristalline Materialien anfallen.

Der Erfindung liegt die Aufgabe zugrunde, ein Verfahren zur Herstellung von Copolymerisaten des Acetylens zu schaffen, die durch die erfindungsgemäßen Comonomeren Heteroatome und andere funktionelle Gruppen enthalten.

Die Aufgabenstellung der Erfindung wird durch ein Verfahren gelöst, bei dem man Gemische aus Acetylen und Heteromono-Alkinen polymerisiert.

Gegenstand der Erfindung ist daher ein Verfahren zur Herstellung von Copolymerisaten des Acetylens durch katalytische Polymerisation von Acetylen mit metallorganischen Katalysatorgemischen. Das Verfahren ist dadurch gekennzeichnet, daß man Gemische aus Acetylen und Heteromono-Alkinen polymerisiert.

Heteromono-Alkine sind z. B. in dem Buch von H. G. Viehe »chemistry of Acetylenes«, Verlag J. Wiley (1964), N. Y. USA sowie in J. org. Synth. Prop. 31 (1973) 466, Japan sowie in Russ. Chem. Reviens 46 (4) 1977 374 beschrieben.

Als Comonomere für das Acetylen kommen z. B. in Frage:

$HC{\equiv}CF$, $HC{\equiv}CCl$, $HC{\equiv}CBr$, $HC{\equiv}CJ$, $HC{\equiv}CCN$, $HC{\equiv}C-CH_2-S-CH_3$.

Man verwendet Monomermischungen, die bis zu 50 Mol% Heteromono-Alkine, vorzugsweise zwischen 5 und 20 Mol% Heteromono-Alkine enthalten.

Die Durchführung der Polymerisation wird am zweckmäßigsten mit Ziegler-Katalysatoren vorgenommen, die durch Mischungen aus Aluminiumtrialkylen und Titantetraoxialkylen hergestellt werden. Von den Aluminiumtrialkylen eignen sich z. B.: Aluminiumtriäthyl sowie Aluminiumtriisobutyl. Bevorzugt ist das Aluminiumtrioctyl.

Von den Titantetraoxialkylen sind solche zweckmäßig, deren Alkylreste 1 bis 10 C-Atome enthalten, insbesondere hat sich das Titantetraoxibutyl als geeignet erwiesen. Das Mischungsverhältnis aus Aluminiumtrialkyl und Titantetraoxialkyl liegt zwischen 0,5 : 1 und 1 : 0,5, vorzugsweise um 1 : 1, jeweils bezogen auf Gewichtsteile. Es ist aber auch möglich, andere Katalysatorgemische, z. B. $CoCl_2$, Coacetylacelonat, $NiCl_2$, Nickelbenzoylaceton, ManganIIIacetylacetonat im Gemisch mit $NaBH_4$ oder Älhydriden, $LiAlH_4$, $Äl(alkyl)_2$hydrid (alkyl ist vorzugsweise n-Butyl) einzusetzen.

Die Katalysatormischung wird in Mengen von 0,1 bis 10 Teilen bezogen auf 100 Teile des Gemisches aus Acetylen und den anderen Alkinen eingesetzt. Die Polymerisationstemperatur liegt zweckmäßig zwischen −90 und +100°C, vorzugsweise zwischen −70 und +10°C. Die Polymerisation erfolgt zweckmäßig bei 0,1 bis 10 bar, vorzugsweise um 1 bar.

Die Polymerisation kann z. B. in Hilfsflüssigkeiten vorgenommen werden. Als solche eignen sich gegenüber den Polymerisationskatalysatoren und den Monomeren indifferente Flüssigkeiten, wie aliphatische Öle, Aromaten, Cycloaliphaten aber auch Petroläther sowie Ligroin. Die Hilfsflüssigkeiten werden im Verhältnis zu dem Gemisch aus Alkinen in einem Mengenverhältnis von 1 : 1 bis 1000 : 1, vorzugsweise im Bereich von 10 : 1 verwendet. Die Katalysatoren können mit der Hilfsflüssigkeit vorgelegt und/oder während der Polymerisation kontinuierlich zugeführt werden.

Es ist aber auch möglich, die Monomeren in der Gasphase zu polymerisieren. Dabei empfiehlt sich, in das Polymerisationsgefäß einen Trägerstoff einzubringen, der bereits aus feinpulvrigem Polymerisat bestehen kann. Die Katalysatoren werden dann in Hilfsflüssigkeiten aufgeschlämmt eingebracht und die Lösungsmittelanteile nach erfolgter Polymerisation abgezogen.

Nach dem Verfahren werden Copolymerisate des Acetylens mit anderen Alkinen erhalten, die neben unlöslichen Anteilen auch lösliche Polymere enthalten. Die löslichen Anteile haben Molekulargewichte, die im Bereich zwischen 250 und 2000 meistens um 1000 liegen. Die Mol-Gewichte wurden Dampfdruckosmometrisch nach einer Methode von Wilson, Bini und Hofstader Anal. Chem. 33, (1961) 135−137 bestimmt. Die neuen Polymerisate sind als farbige Pigmente aufgrund ihrer Filmbildungstendenz als Farbüberzüge auf Metalle, Glas oder Kunststoffe von Interesse.

Beispiel 1

Herstellung des Katalysators

Zunächst wurden 4,57 g Aluminiumtriäthyl in 50 ml Toluol gemischt (40 mMol). Danach wurden 3,4 g

Titantetraoxibutyl zugegeben (10 mMol). Diese Lösung wurde geschüttelt und etwa für die Dauer von 10 Minuten stehen gelassen, wobei die Lösung eine schwarz-braune Farbe annahm. Die jeweils benötigten Katalysatormengen wurden mit einer Spritze entnommen und den Reaktionsansätzen zugesetzt.

Copolymerisation von Acetylen mit Heteromono-Alkinen

In einem 100 ml Rundkolben wurden jeweils 40 ml Acetylen in 50 ml Toluol gelöst, so daß eine gesättigte Lösung erhalten wurde. Danach wurden unterschiedliche Mengen Alkine zugesetzt und nach dem Mischen jeweils 10 ml der oben angegebenen Katalysatorlösung zugesetzt.

Nach jeweils 24 Stunden wurden jeweils 20 ml methanolische Salzsäure zugegeben. Die schwarzen Niederschläge wurde abfiltriert und mit Methanol gewaschen. Die verbleibende Lösung wurde mehrfach mit Salzsäure geschüttelt. Das Lösungsmittel wurde unter Stickstoff entfernt und der Rückstand nach dem Wägen ermittelt und in verschiedene Lösungsmittel aufgenommen. Die Ergebnisse zeigt Tabelle 1.

Tabelle

| Nr. | Acetylen mg | Monomeres mg | unlösliches Polymer mg |
|---|---|---|---|
| 1 | 40 | 40 $CH\equiv CCl$ | 73 |
| 2 | 40 | 20 $CH\equiv CCl$ | 49 |
| 3 | 40 | 10 $CH\equiv CCl$ | 38 |
| 4 | 40 | 40 $CH\equiv C-CN$ | 79 |
| 5 | 40 | 30 $CH\equiv CBr$ | 64 |

Copolymerisation zur Herstellung eines Filmes

In ein 500 ml Gefäß wurde nach dem Evakuieren und Spülen mit Stickstoff jeweils 100 ml Toluol und 20 ml der oben angegebenen Katalysatorlösung zugegeben. Das Reaktionsgefäß wurde auf einer Temperatur von $-50°$ C gehalten. Nach Erreichen dieser Temperatur wurde ein Gemisch aus Acetylen und Bromacetylen auf die Oberfläche der Flüssigkeit aufgebracht. Nachdem die Polymerisation beendet war, wurde die Flüssigkeit aus dem Reaktionsgefäß abgesaugt. Der erhaltene Film des Polymerisates wurde gewaschen und getrocknet.

Herstellung von Polymerisatpulver

Durch Einleiten von Gemischen aus Acetylen und Bromacetylen wurden gesättigte Lösungen in Toluol hergestellt. Es wurden 30 ml einer gesättigten Toluollösung mit 10 ml der Katalysatorlösung gemischt. Das nach 2 Stunden erhaltene Copolymerisat wurde abgesaugt und mit Toluol gespült. Das Polymere wurde pressend zwischen zwei Filterpapieren getrocknet, anschließend wurde die Masse für die Dauer von 24 Stunden mit Eisessig am Soxhlett eluiert. Es bildet sich ein feinteiliges Produkt von dunkelgelber Farbe. Das erhaltene Copolymerisat wurde bei 60° C im Trockenschrank getrocknet.

Ausfällen der löslichen Oligomeren

Beim Aufgießen der erhaltenen Toluollösung in Methanol bildet sich an der Oberfläche ein glänzender, dünner Film, der in der Durchsicht rötlich erscheint. Der Film erhielt ein Copolymerisat in Mengen von ca. 10 Gew.-%, bezogen auf die Ausgangsmonomeren.

Copolymerisation von Acetylen mit unterschiedlichen Mengen Heteromonoacetylen

Es wurden jeweils unterschiedliche Mengen von Acetylen und Cyanoacetylen im Toluol mit Hilfe des oben angegebenen Katalysators polymerisiert. Nach Beendigung der Polymerisation wurden die Polymerisate mit methanolischer Salzsäure ausgefällt und die Anteile an unlöslichen Monomeren bestimmt. Die löslichen Oligomeren wurden aus der Toluollösung gewonnen und die Mengen ermittelt.

Die Ergebnisse sind in der nachstehenden Tabelle 2 zusammengefaßt.

Tabelle 2
Copolymerisation von Acetylen und Cyanoacetylen
(Temperatur −10° C; Lösung: 100 ml Toluol)
Menge an löslichen und unlöslichen Polymerisationsprodukten

| Nr. | Acetylen mg | Acetylen (mMol/l) | Cyanoacetylen | Polymer (mg) unlöslich |
|---|---|---|---|---|
| 1 | 40 | 34 | 0,5 | 33 |
| 2 | 40 | 34 | 3 | 36 |
| 3 | 40 | 34 | 6 | 40 |
| 4 | 40 | 34 | 10 | 43 |
| 5 | 40 | 34 | 20 | 52 |
| 6 | 40 | 34 | 30 | 63 |
| 7 | 40 | 34 | 50 | 82 |
| 8 | 40 | 34 | 100 | 112 |
| 9 | 40 | 34 | 300 | 294 |

## Beispiel 2

### Copolymerisation von Acetylen mit Hilfe anderer Katalysatorsysteme

In einem 100 ml Rundkolben wurden jeweils 40 mg Acetylen und das jeweilige Comonomere in N-Methylpyrrolidon gelöst und unter Reinst-Argon (>99,99%) 100 mg eines Schwermetallsalzes sowie 100 mg eines Reduktionsmittels zugesetzt und 30 Minuten bei −10° C gerührt, anschließend 30 Minuten bei Raumtemperatur, anschließend wird die Reaktionslösung wie im Beispiel 1 beschrieben aufgearbeitet. Die Ergebnisse zeigt die Tabelle 3.

Tabelle 3

| Nr. | Comonomeres mg | Schwermetallsalz mg | Reduktionsmittel mg | Polymer unlöslich mg |
|---|---|---|---|---|
| 1 | $HC{\equiv}CCF_3$ | 5 $CoCl_2$ | $NaBH_4$ | 43 |
| 2 | $HC{\equiv}CCl$ | 5 Coacetylacelonat | $NaBH_4$ | 42 |
| 3 | $HC{\equiv}CCl$ | 5 Mn-III-acetylacelonat | $Al(C_4H_9)_2H$ | 44 |
| 4 | $HC{\equiv}CBr$ | 5 $NiCl_2$ | $LiAlH_4$ | 42 |
| 5 | $HC{\equiv}CCN$ | 5 Fe-III-acetylacelonat | $NaBH_4$ | 40,5 |
| 7 | $HC{\equiv}CF$ | 5 Cu-III-acetylacelonat | $NaBH_4$ | 44 |
| 8 | $HC{\equiv}C-CH_2-S-CH_3$ | 5 Mo-III-acetylacelonat | $NaBH_4$ | 45 |
| 9 | $HC{\equiv}CCl$ | 15 $PdCl_2$ | $NaBH_4$ | 52 |
| 10 | $HC{\equiv}CBr$ | 10 $CoCl_2$ | $AlH_3$ | 30 |

## Patentansprüche

1. Verfahren zur Herstellung von Copolymerisaten des Acetylens durch katalytische Polymerisation von Mischungen des Acetylens mit bis zu 50 Mol-% an Comonomeren mittels Ziegler-Katalysatoren, dadurch gekennzeichnet, daß man Gemische aus Acetylen und Heteromonoalkinen polymerisiert.

2. Verfahren zur Herstellung von Copolymerisaten des Acetylens nach Anspruch 1, dadurch gekennzeichnet, daß man als Ziegler-Katalysatoren Gemische aus Titantetraoxialkylen und Aluminiumtrialkylen verwendet.

3. Verfahren zur Herstellung von Copolymerisaten des Acetylens nach Anspruch 1, dadurch gekennzeichnet, daß man das Gemisch aus Acetylen und Heteromonoalkinen in einer Hilfsflüssigkeit polymerisiert.

4. Verfahren zur Herstellung von Copolymerisaten des Acetylens nach Ansprüchen 1, 2 und 3, dadurch gekennzeichnet, daß man bei einer Temperatur zwischen −70 bis +10° C polymerisiert.

5. Verfahren zur Herstellung von Copolymerisaten des Acetylens nach Anspruch 1, dadurch gekennzeichnet, daß man als Katalysatoren Gemische aus Schwermetallsalzen und Reduktionsmitteln einsetzt.

## Claims

1. A process for the preparation of acetylene copolymers by catalytic polymerization of mixtures of acetylene with up to 50 mole% of comonomers using Ziegler catalysts, wherein mixtures of acetylene and heteromonoalkynes are polymerized.

2. A process for the preparation of acetylene copolymers as claimed in claim 1, wherein the Ziegler catalysts used are mixtures of titanium tetraoxyalkyls and aluminium trialkyls.

3. A process for the preparation of acetylene copolymers as claimed in claim 1, wherein the mixture of acetylene and heteromonoalkynes is polymerized in an auxiliary liquid.

4. A process for the preparation of acetylene copolymers as claimed in claims 1, 2 and 3, wherein the polymerization is carried out at from −70 to +10° C.

5. A process for the preparation of acetylene copolymers as claimed in claim 1, wherein the catalysts used are mixtures of heavy metal salts and reducing agents.

## Revendications

1. Procédé pour la préparation de copolymères de l'acétylène par polymérisation catalytique de mélanges de l'acétylène avec jusqu'à 50 mol % de comonomères au moyen de catalyseurs de Ziegler, caractérisé en ce qu'on polymérise des mélanges d'acétylène et d'hétéro-monoalcynes.

2. Procédé pour la préparation de copolymères de l'acétylène selon la revendication 1, caractérisé en ce qu'on utilise, en tant que catalyseurs de Ziegler, des mélanges de tétraoxyalcoyl-titanes et de trialcoyl-aluminiums.

3. Procédé pour la préparation de copolymères de l'acétylène selon la revendication 1, caractérisé en ce qu'on polymérise le mélange d'acétylène et d'hétéro-monoalcynes dans un liquide auxiliaire.

4. Procédé pour la préparation de copolymères de l'acétylène selon l'une quelconque des revendications 1 à 3, caractérisé en ce qu'on polymérise à une température comprise entre −70 et +10° C.

5. Procédé pour la préparation de copolymères de l'acétylène selon la revendication 1, caractérisé en ce qu'on utilise, en tant que catalyseurs, des mélanges de sels de métaux lourds et de réducteurs.